# FASCICULE DE BREVET EUROPEEN

(11) **EP 3 371 719 B1**
(45) Date de publication et mention de la délivrance du brevet: **17.07.2019**
(21) Numéro de dépôt: 16793789.5
(22) Date de dépôt: 26.10.2016
(51) Int. Cl.: G06F 17/50, G06F 9/52

(54) **PROCEDE DE SIMULATION PARALLELE DE NIVEAU SYSTEME ELECTRONIQUE AVEC DETECTION DES CONFLITS D'ACCES A UNE MEMOIRE PARTAGEE**
PARALLELES SIMULATIONSVERFAHREN EINER ELEKTRONISCHEN SYSTEMEBENE MIT DETEKTION VON KONFLIKTEN BEIM ZUGANG ZU EINEM GEMEINSAMEN SPEICHER
ELECTRONIC SYSTEM LEVEL PARALLEL SIMULATION METHOD WITH DETECTION OF CONFLICTS OF ACCESS TO A SHARED MEMORY

(30) Priorité: 04.11.2015 FR 1560551
(43) Date de publication de la demande: 12.09.2018
(73) Titulaire: Commissariat à l'Énergie Atomique et aux Énergies Alternatives, 75015 Paris (FR)
(72) Inventeur: VENTROUX, Nicolas, 91300 Massy (FR); SASSOLAS, Tanguy, 75014 Paris (FR)
(74) Mandataire: Priori, Enrico
(86) Numéro de dépôt international: PCT/EP2016/075860
(87) Numéro de publication internationale: WO 2017/076723

(56) Documents cités:
- EP-A2- 0 438 890
- US-A1- 2015 058 859
- WEIWEI CHEN ET AL: "Optimized out-of-order Parallel Discrete Event Simulation using predictions", DESIGN, AUTOMATION &TEST IN EUROPE CONFERENCE&EXHIBITION (DATE), 2013, IEEE, 18 mars 2013 (2013-03-18), pages 3-8, XP032395676, DOI: 10.7873/DATE.2013.016 ISBN: 978-1-4673-5071-6
- HELMSTETTER C ET AL: "Automatic Generation of Schedulings for Improving the Test Coverage of Systems-on-a-Chip", FORMAL METHODS IN COMPUTER AIDED DESIGN, 2006. FMCAD '06, IEEE, PI, 1 novembre 2006 (2006-11-01), pages 171-178, XP031022270, DOI: 10.1109/FMCAD.2006.10 ISBN: 978-0-7695-2707-9 cité dans la demande

## Description

L'invention concerne le domaine des outils et méthodologies de conception des systèmes sur puce (SoC, de l'anglais « System on a Chip »). Plus précisément elle concerne la mise en oeuvre parallèle de simulations de haut niveau de tels systèmes.

Un système électronique complexe comprend généralement une plateforme matérielle spécifique et un code applicatif destiné à être exécuté sur une telle plateforme. La conception du système nécessite, entre autre, de valider l'exécution du code applicatif sur la plateforme matérielle avant sa conception finale. Les coûts de la phase de conception et de fabrication sont trop importants pour pouvoir réaliser plusieurs essais : l'intégralité du système doit pouvoir être validée avant sa fabrication, et cela dans les délais les plus courts possibles. Ainsi sont apparus des outils de modélisation haut-niveau capables de modéliser les parties logicielles et matérielles d'un système complexe et permettant le prototypage logiciel comme l'exploration architecturale. Ces outils offrent également parfois la possibilité de simuler les interfaces utilisateurs pour accompagner le développement applicatif jusqu'au produit final. On parle à ce propos de simulations « de niveau système électronique » (ESL, de l'anglais « Electronic System Level »).

Il est ainsi devenu indispensable, lors de la phase de conception, de pouvoir utiliser ces plateformes logicielles. Elles permettent de faciliter le développement des logiciels bas-niveau (pilotes, système d'exploitation...), ou encore de faire de l'exploration architecturale. L'exploration architecturale est une phase d'optimisation qui permet de définir la taille et les caractéristiques des différents éléments appartenant au système, comme la taille ou le type des mémoires cache, ou encore par exemple la taille des liens des réseaux d'interconnexion. Plus récemment, des moyens ont été ajoutés aux outils de prototypage pour étudier d'autres paramètres tels que la consommation d'énergie ou la température. La possibilité de disposer de toutes ces informations très tôt dans le flot de conception offre de très nombreux avantages impactant directement la compétitivité du produit final. Il permet par exemple de faire de meilleurs choix architecturaux afin d'accroître les performances et l'efficacité énergétique, ou plus encore de paralléliser les différentes phases de conception afin de réduire considérablement les temps de conception.

Une grande majorité de ces outils de prototypage logiciels sont basés sur la librairie et noyau de simulation C/C++ appelée SystemC, ainsi que sur son extension nommée Transactional Level Modeling (TLM). Ces deux éléments font partie du standard IEEE 1666-2011. L'invention s'applique notamment aux simulations SystemC/TLM, et sera décrite en référence à ce cas particulier. Elle peut néanmoins s'appliquer à d'autres techniques de simulation de niveau système électronique, en particulier à celles utilisant (comme SystemC et TLM) un noyau de simulation à évènements discrets (DES, de l'anglais « Discrète Event Simulation ») - c'est-à-dire considérant que l'état du système évolue uniquement en réponse à des événements discrets, au lieu de suivre son comportement de manière continue.

En dehors des phases d'initialisations, dont les durées sont proportionnellement limitées, le noyau SystemC est composé de 5 phases principales et séquentielles : la phase d'évaluation des processus SystemC, la phase de notification immédiate, la phase de mise-à-jour, la phase de notification delta et la phase de notification temporelle. Les 3 premières phases forment ce qu'on appelle un cycle delta (« delta-cycle » en anglais).

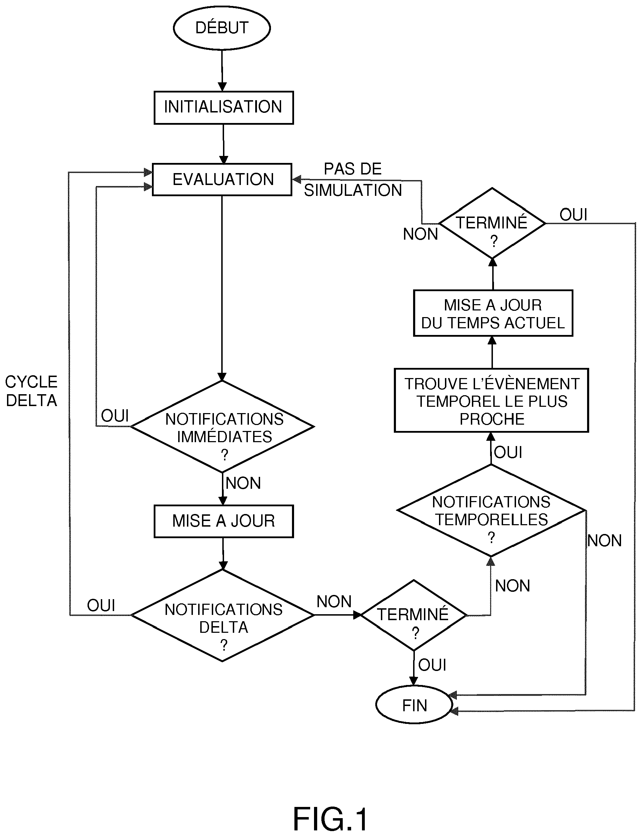

Le déroulement de la simulation est illustré par l'ordinogramme de la figure 1.

Un processus SystemC est une fonction ou une tâche logicielle décrivant le comportement d'une partie d'un module du système. A l'initialisation, tous les processus SystemC sont exécutés dans un ordre arbitraire ; ces processus sont, en principe, concurrents, c'est-à-dire qu'ils représentent des traitements qui, dans le composant réel, seront exécutées de manière parallèle. Durant la phase d'évaluation, tous les processus présents dans une file d'attente sont évalués. Durant son évaluation, chacun des processus peut écrire sur des signaux ou des ports de sortie (notification delta), notifier un évènement pour réveiller d'autres processus dépendants (notification immédiate) ou générer un évènement temporel (notification temporelle). Une notification immédiate a l'effet de positionner aussitôt les processus sensibles dans la file d'attente. La phase d'évaluation se termine seulement lorsque toute la file d'attente a été traitée, et qu'il n'y a donc plus de processus prêt à être évalué. La phase de mise-à-jour prend alors la suite. Cette phase consiste à mettre à jour tous les signaux et ports de sortie qui ont été modifiés pendant les différentes phases d'évaluation successives. Comme dans tout langage de description matérielle, il est important que les états des signaux ne soient mis à jour qu'à la fin de l'évaluation. En effet, tous les processus sont évalués séquentiellement et c'est la seule solution garantissant qu'une lecture d'un signal modifié retournera la valeur courante et non pas la nouvelle valeur, comme ce qui se passerait dans des modules réellement concurrents. A la fin de la phase de mise-à-jour, la phase de notification delta commence. Elle consiste à mettre tous les processus sensibles aux évènements liés aux notifications delta dans la liste d'attente pour une future évaluation. Typiquement, l'écriture d'un signal génèrera ce type de notification et tous les processus sensibles à ce signal seront évalués par la suite. Si la file d'attente est non vide (il reste des processus prêts à être évalués), la phase d'évaluation est relancée ainsi que toutes les autres phases qui en découlent, et cela jusqu'à ce que la file d'attente soit vide après la phase de notification delta ; c'est ce qu'on appelle le « cycle delta ». Enfin, si la simulation n'est pas terminée, la phase de notification temporelle a lieu. Elle consiste à vérifier si des notifications temporelles sont présentes ; dans l'affirmative, identifier l'événement temporel le plus proche, mettre à jour le temps actuel de la simulation, vérifier encore une fois si la simulation est terminée et, dans la négative, lancer une nouvelle phase d'évaluation des processus.. De manière générale, la simulation SystemC s'arrête lorsque le temps de simulation atteint le temps de simulation demandé initialement ou que plus aucun processus n'est prêt à s'exécuter à la fin de la phase de notification temporelle.

Il y a encore quelques années, la conception d'un système passait par la mise en oeuvre d'une solution logicielle de prototypage capable d'exécuter son code applicatif ainsi que de supporter l'exploration architecturale. Un seul et même modèle servait de plateforme unique pour la conception logicielle (driver, logiciel système...) et matérielle. Ces simulateurs intégraient le flot de conception classique garantissant un flot unifié depuis les applications jusqu'au matériel. Cela n'est plus toujours possible, du fait de la complexité grandissante des systèmes à concevoir.

Une solution à ce problème, qui est aujourd'hui généralement utilisée par les industriels, consiste à utiliser deux plateformes logicielles distinctes : d'une part, des prototypes logiciels, comme simulateur pour le développement applicatif ; d'autre part, des prototypes matériels, pour l'exploration, l'analyse et la conception architecturale. Cette séparation est principalement due au fait que les prototypes matériels sont devenus trop lents pour le développement applicatif. Au contraire, une abstraction plus importante du comportement de la plateforme ou des informations temporelles permet de réduire significativement les temps de simulation. Malheureusement, cette approche a ses limites. En effet, la complexité des systèmes étant toujours plus importante, il ne sera pas toujours possible d'améliorer les temps de simulation en réduisant la précision. Par ailleurs, la perte d'information et de précision des modèles utilisés lors du développement logiciel introduit irrémédiablement des erreurs dans le flot de conception. Certains outils actuels tentent de garantir la compatibilité des prototypes, mais celle-ci n'est possible que sur certaines plateformes bien spécifiques, dont les modèles sont préconçus. Ce qui a pour effet de réduire le spectre des solutions envisageables.

Une autre approche consiste à maintenir l'unité de la plateforme, et à accélérer les simulations au moyen d'une exécution parallèle efficace du noyau SystemC sur plusieurs coeurs de calcul. Cette approche - qui est aussi celle de l'invention - est illustrée, par exemple, dans les documents [EZUD09], [SCHU10], [CHU14].

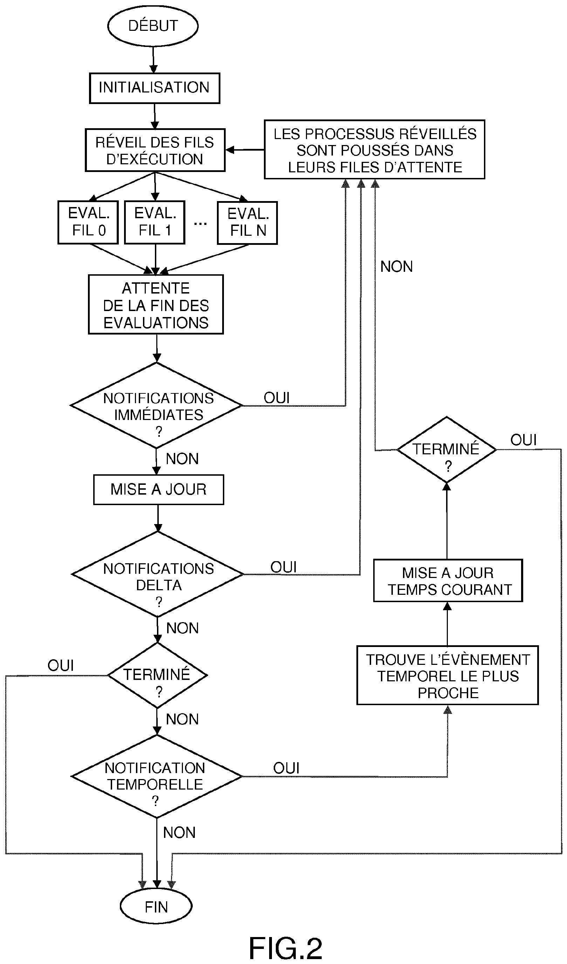

La figure 2 illustre, de manière simplifiée, le déroulement d'une simulation SystemC parallèle.

Après son initialisation, qui inclut les phases d'élaboration et de liaison, c'est-à dire l'instanciation et la création dynamique du modèle qui doit être simulé, le noyau crée une pluralité de fils d'exécution (« threads » en anglais) qui, de préférence, sont associés chacun à un coeur respectif du système informatique (coeur logique) ; le terme « fil d'exécution » désigne, d'une manière générale, un groupe de processus qui sont évalués séquentiellement. Puis les processus du modèle sont repartis entre les fils d'exécution (et donc entre les coeurs logiques). Une file d'attente est associée à chaque fil d'exécution, et tous les processus qui sont prêts à être évalués sont poussés dans leur file d'attente. L'ordre des processus dans chaque fil d'attente est arbitraire, car le résultat de la simulation est censé être indépendant de cet ordre à l'intérieur de chaque phase d'évolution. Dans la suite on considérera uniquement le cas où chaque coeur logique évalue un seul fil d'exécution (ou aucun) ; cependant il ne s'agit pas là d'une limitation fondamentale et l'invention couvre également le cas où au moins certains coeurs logiques peuvent évaluer plusieurs fils d'exécution ainsi que le cas ou plusieurs coeurs logiques évaluent un même fil d'exécution de façon séquentielle.

Chaque phase d'exécution démarre par le réveil des fils d'exécution, numérotés de 0 à N, qui évaluent ensuite de manière parallèle les processus de leur file d'attente. Le noyau reste en attente jusqu'à ce que toutes les évaluations soient terminées.

Les autres étapes de la simulation sont classiques: le noyau vérifie si des notifications immédiates sont présentes et, dans l'affirmative, les processus réveillés par ces notifications sont placés dans les files d'attente correspondantes ; puis le noyau vérifie si des notifications delta sont présentes et, dans l'affirmative, les processus réveillés par ces notifications sont placés dans les files d'attente correspondantes. Ensuite, sauf si la simulation est terminée, le noyau vérifie si des notifications temporelles sont présentes ; dans l'affirmative, il identifie l'événement temporel le plus proche, il met à jour le temps actuel de la simulation, il vérifie si la simulation est terminée et, dans la négative, pousse les processus réveillés par les notifications temporelles dans leurs files d'attente.

Une simulation SystemC «classique » (effectuée de manière séquentielle par un seul coeur logique, comme dans le cas de la figure 1) est déterministe. L'évaluation séquentielle des processus SystemC garantit que, pour des entrées données et pour une même instance du simulateur, le résultat sera toujours le même. Autrement dit, le comportement d'une simulation SystemC est reproductible. Ceci est important pour le développement logiciel et la recherche d'erreurs (« débogage ») lorsque le simulateur est la plateforme d'exécution, pour la mise au point des modèles SystemC ou encore pour la résolution de problèmes de conditions de concurrence. Néanmoins, SystemC possède un certain indéterminisme dont l'impact peut s'avérer important selon la description du simulateur. Par exemple l'utilisation de primitives symbolisant les « mutex » ou sémaphores, ou l'utilisation de notifications immédiates pour synchroniser des processus, peut résulter en un comportement non déterministe. En effet, comme indiqué plus haut, l'ordre d'évaluation des différents processus lors de la phase d'évaluation est indéterminé (non-déterministe) et dépend de l'implémentation du modèle SystemC. Cette particularité dans SystemC n'a jamais été corrigée par un ordonnancement statique des processus, car le non-déterminisme dans SystemC possède certains avantages. Tout d'abord, il permet la modélisation de systèmes non-déterministes comme le seraient par exemple des systèmes réels parallèles. Ensuite, ceci permet de faire apparaître, selon les entrées du système, des erreurs de modélisation. D'après les spécifications de SystemC, l'architecte utilisant SystemC doit savoir au moment de la conception que l'ordre de l'évaluation des processus lors de la phase d'évaluation est non-déterminé.

De manière générale, les erreurs liées à la concurrence dans les systèmes logiciels parallèles peuvent être de quatre types. Les erreurs dites de conditions de concurrence (« data race » en anglais), les violations d'accès atomiques, les violations d'ordre et les inter-blocages. Ces phénomènes peuvent intervenir dès lors que deux processus parallèles exécutent une section critique de manière non atomique. Autrement dit, dès lors que deux processus parallèles accèdent à une donnée partagée, non protégée, et qu'au moins une écriture intervient. Les effets vont des erreurs irréversibles immédiates jusqu'à la corruption de données silencieuses pouvant conduire à des problèmes tout autant importants. Une simulation SystemC séquentielle a l'inconvénient, et parfois l'avantage, de cacher la plupart des erreurs liées à la concurrence et cela quel que soit le type de communication utilisé. Ainsi, la plupart de ces erreurs ne peuvent pas être modélisées et résolues. Le concepteur doit attendre une exécution sur la plateforme matérielle pour résoudre les bogues liés à la concurrence. Certains travaux dans la littérature proposent de modifier l'ordonnancement des processus pendant la phase d'évaluation pour remédier à ce problème et étudier de façon intensive l'impact de l'ordre d'évaluation sur le comportement du système.

Un inconvénient des simulations SystemC est donc que l'exécution séquentielle et déterministe conduit à masquer la plupart des erreurs de concurrence. Ces simulations ne permettent donc pas toujours une validation complète du système modélisé. Pour cette raison, des recherches ont été effectuées pour identifier des moyens de détection et de vérification du déterminisme dans les modèles SystemC.
- [BLAN08] décrit un nouveau compilateur SystemC intégrant une technique de vérification automatique statique (« model checking » en anglais). Cette technique consiste à vérifier algorithmiquement si un modèle SystemC donné satisfait une spécification. Dans [BLAN08], la vérification vise à améliorer les performances et de détecter des erreurs de concurrence. La limitation principale de cette approche réside dans sa non-capacité à adresser des problèmes de large complexité, ou utilisant des allocations dynamiques ou des pointeurs. Par ailleurs, un grand nombre de primitives SystemC ne peuvent pas être supportées.
- [HELM06] propose de générer de multiples ordres d'ordonnancement afin de mettre en évidence des erreurs de concurrence. Pour ce faire, [HELM06] propose d'instrumenter chaque accès à des variables partagées et de surveiller les lectures et écritures, afin de générer un graphe, dit « de dépendances », entre les processus lors de l'exécution du simulateur. Ce graphe est ensuite utilisé pour générer, via une technique de réduction dynamique d'ordre partiel, l'ensemble des ordonnancements possibles susceptibles de faire apparaître des erreurs de concurrence. Le nombre d'ordonnancements possibles reste néanmoins très important et cette technique ne permet pas d'adresser des systèmes de grande taille.
- [SEN08] propose d'instrumenter les modèles SystemC pour détecter l'ensemble des dépendances pendant l'exécution du simulateur en utilisant une technique de temps logique vectoriel, puis d'analyser formellement les traces d'exécution générées en les comparant à des assertions prédéterminées. Ces traces donnent une information détaillée des différents ordres partiels obtenus lors de chaque phase d'évaluation et permettent ensuite de détecter de possibles inter-blocages ou erreurs de concurrence. Ces travaux ne supportent pas les communications TLM.
- Les approches « basées sur les tests » consistent à générer plusieurs ordonnancements possibles et à comparer les résultats produits pour détecter d'éventuels problèmes de déterminisme. Par exemple, [LE14] utilise une transformation du modèle SystemC en un modèle complètement statique en C ; les processus communiquent alors entre eux seulement via des variables partagées. Ensuite deux ordonnancements des processus sont générés, un complètement statique et ordonné, et l'autre dont l'ordre d'évaluation est indéterminé. La différence de résultat est analysée pour mettre en exergue des problèmes de déterminisme. Au contraire, [HERR06] propose de générer un ordonnancement aléatoire et d'exécuter de multiples instances de simulation pour détecter d'éventuelles erreurs. Enfin, [SCHU12a] propose une approche légèrement différente en enregistrant différentes grandeurs observables comme l'activation des processus, l'allocation de la pile, la sortie standard, l'utilisation de nombres aléatoires, etc. L'exécution successive de simulations en comparant ces grandeurs permet la détection d'erreurs de concurrence. L'inconvénient principal de ces techniques réside dans la nécessité de réaliser plusieurs exécutions successives et donc augmenter la durée de simulation.

La parallélisation « naïve » de SystemC induit d'autres difficultés liées à la concurrence. En effet, sans précaution particulière, une telle parallélisation conduit inévitablement à des erreurs liées à la concurrence, et donc à un comportement non-déterministe de la simulation. Cela n'est pas compatible avec le déterminisme exigé par SystemC. Paralléliser le noyau de simulation SystemC est un problème difficile car un tel noyau parallèle ne doit pas générer un comportement différent d'une implémentation séquentielle. Des conditions de concurrences (« race condition »), l'ordre et les instants temporels d'activation des processus, et l'implémentation de tous les mécanismes précédemment décrits doivent être respectés. La difficulté réside alors dans la mise en oeuvre d'une telle parallélisation pour garantir un haut niveau de performance et le déterminisme des simulations. Ce problème (comment paralléliser SystemC tout en respectant la condition de déterminisme) a été abordé dans les publications suivantes :
- [CHEN12] propose de détecter l'occurrence d'erreurs liées à la concurrence par une analyse statique du code des processus SystemC, capable de détecter les dépendances entre les processus, en s'intéressant essentiellement aux transitions (c'est-à-dire au code exécuté entre deux appels à la primitive «wait»). Avec cette information, il est possible de définir un ordonnancement des processus qui garantit la non-génération d'erreurs de concurrence en séquentialisant les processus dépendants. Une telle approche statique s'avère très lourde et conduit à la génération de solutions peu parallélisables avec l'utilisation de communications TLM. En effet, tous les processus accédant à un élément mémoire en TLM se voient exécuter de manière séquentielle.
- [EZUD09] utilise des mécanismes de synchronisation basés sur la déclaration de sections critiques OpenMP pour protéger les variables partagées du noyau qui doivent être accessibles par les processus SystemC qui sont évalués en parallèle. Ces techniques interdisent l'utilisation de variables partagées ou utilisent des synchronisations particulières pour y accéder, imposant à l'utilisateur de garantir l'atomicité des accès mémoires et des communications.
- [MELL10] exploite le fait que les simulations ESL sont généralement à évènements discrets et, dès lors, n'utilisent pas d'horloge, pour autoriser, dans le cadre d'une approche spéculative, certaines violations d'ordre temporel d'exécution grâce à l'ajout de certains mécanismes logiques. Les processus SystemC possèdent un temps local qui est synchronisé avec les autres éléments du système à chaque communication ou chaque fois qu'un seuil de temps prédéfini (encore appelé quantum) est atteint. Ainsi la violation d'ordre temporel ne peut pas dépasser la durée d'un quantum et la contrainte de synchronisation, pénalisante pour les performances, est relâchée. Ceci nécessite de contraindre fortement la description du modèle et interdit certaines utilisations de SystemC. Cette approche n'est donc pas utilisable de manière générale et surtout est très couteuse à cause de l'utilisation de mécanismes de spéculation.
- [MOY13] propose également de ne pas respecter strictement l'ordonnancement temporel des processus SystemC et d'utiliser une librairie particulière pour déclarer les traitements des processus dépendants, contraignant fortement la façon de décrire des modèles en SystemC. Chaque traitement dans un processus est associé à un temps d'exécution. Une analyse statique permet alors de définir un ordre total des traitements et de définir lesquels pourront être exécutés en parallèle sans risque de conflit. Ce mécanisme fonctionne uniquement si les processus dépendants peuvent être désynchronisés et ne peut pas être généralisé dans le cas de simulations TLM dont l'ensemble des processus peuvent devoir accéder de manière aléatoire à une ressource partagée comme la mémoire.
- [SCHU13] propose des mécanismes pour résoudre les conflits d'accès des processus parallèles et dépendants et garantir l'atomicité des simulations. Les simulations basées sur des communications utilisant l'extension TLM 2.0 sont ici supportées. Le premier mécanisme consiste à créer des groupes de processus qui seront par la suite évalués sur des fils d'exécution indépendants. Lorsqu'un processus souhaite communiquer avec un autre processus appartenant à un autre groupe, alors ce premier est migré dynamiquement avec son contexte vers l'autre groupe. Ceci est réalisé pendant la phase d'évaluation et garantit l'atomicité de l'exécution des différents processus. Toutes les communications doivent alors passer par des interfaces TLM. En ce qui concerne les communications directes via des variables globales ou statiques, des précautions manuelles particulières doivent être prises par le concepteur si des processus de groupes différents peuvent y accéder. Tous les modules d'un groupe peuvent accéder à des fonctions membres d'autres modules du même groupe. Afin de permettre la prédictibilité et le déterminisme des simulations, une file d'exécution ordonnée est utilisée pour chacun des groupes. Ceci garantit que les processus dépendants s'exécutent toujours dans le même ordre à chaque phase d'évaluation. L'inconvénient majeur de cette approche réside dans la migration des processus vers d'autres fils d'exécution. Par ailleurs, souvent dans une simulation SystemC, la cible d'une transaction n'est pas un processus SystemC mais une simple fonction et il n'est donc pas possible avec cette méthode de garantir l'atomicité de ses accès. Enfin, l'intégration de processus dépendants dans un même groupe limite la parallélisation possible et donc les performances.

En conclusion, les implémentations séquentielles (conventionnelles) de SystemC présentent l'inconvénient de masquer les erreurs de concurrence, tandis que les implémentations parallèles peuvent mettre en évidence ces erreurs, mais au prix de la perte du déterminisme, ce qui n'est pas acceptable. Plusieurs solutions, qui viennent d'être exposées, ont été proposées pour pallier à ces inconvénients, mais aucune ne donne entière satisfaction.

Le document US 2015/058859 décrit un procédé de simulation parallèle de niveau système électronique mis en oeuvre au moyen d'un système informatique multi-coeurs comprenant un mécanisme de détection des accès à une mémoire partagée, mais pas des conflits d'accès.

[CHEN13] adresse le problème de la détection des conflits d'accès, mais nécessitant une analyse au moment de la compilation.

Le document EP 0 438 890 concerne les simulations à événements discrets réalisées au moyen de systèmes multiprocesseurs et divulgue la recherche de composantes fortement connexes dans un graphe de dépendance, mais pas dans le but d'identifier des conflits d'accès à une mémoire partagée.

L'invention vise à surmonter ces inconvénients de l'art antérieur. Plus particulièrement elle vise à permettre des simulations de niveau système électronique exécutées de manière parallèle sur un système informatique multi-coeurs, respectant la condition de déterminisme tout en mettant en évidence les situations susceptibles de conduire à des erreurs de concurrence.

Conformément à l'invention, cet objectif est atteint grâce à la construction, au cours de l'exécution parallèle d'une simulation de niveau système électronique, d'un graphe de dépendance et son exploitation dynamique pour détecter des erreurs de déterminisme / d'atomicité ou pour « rejouer » de manière déterministe une exécution précédente de la simulation.

Selon différents modes de réalisation, l'invention exploite la création dynamique de graphes de dépendance définissant un ordre partiel entre les processus s'exécutant en parallèle pendant une phase d'évaluation, la génération d'une liste ordonnée de processus à exécuter de manière séquentielle dans la même phase d'évaluation et l'utilisation de la liste ordonnée pour ordonnancer séquentiellement les processus accédant à des zones mémoires devant être atomiques. L'utilisation de ces graphes permet de vérifier les propriétés d'atomicité de la phase d'évaluation par l'utilisation complémentaire d'un algorithme de recherche de composantes fortement connexes. En cas de détection d'une erreur de concurrence, il est alors envisageable de faire un retour en arrière et de ré-exécuter la phase d'évaluation selon un ordre partiellement séquentiel (cela est cependant lourd à mettre en place), ou de modifier le modèle pour prévenir l'effet d'entrelacement des processus. Enfin, la sauvegarde de tous les graphes après leur sérialisation peut permettre une utilisation ultérieure afin de reproduire le même ordre d'évaluation des processus au sein de chaque phase d'évaluation et d'obtenir un modèle déterministe et prédictible pour le débogage.

Un objet de l'invention est donc un procédé de simulation parallèle de niveau système électronique mis en oeuvre au moyen d'un système informatique multi-coeurs, ledit procédé comprenant l'évaluation parallèle d'une pluralité de processus concurrents de ladite simulation sur une pluralité de coeurs logiques dudit système informatique, lesdits processus concurrents étant regroupés dans des fils d'exécution, les processus concurrents d'un même fil d'exécution étant évalués séquentiellement par un même coeur logique du système, le procédé étant caractérisé en ce qu'il comprend un sous-procédé de détection de conflits d'accès à une mémoire partagée d'un système électronique simulé, ledit sous-procédé étant mis en oeuvre par un noyau de simulation exécuté par ledit système informatique et comprenant : une étape de construction d'un graphe orienté représentatif d'accès à ladite mémoire partagée par les processus évalués par lesdits processus concurrents ; et une étape de détection de boucles dans ledit graphe ; une boucle étant considérée représentative d'un conflit d'accès à ladite mémoire partagée.

Selon des modes de réalisation particuliers de l'invention :
- Ledit graphe orienté peut comprendre des noeuds, représentant chacun un fil d'exécution, et des arcs reliant chacun deux noeuds, chaque arc représentant une relation d'ordre d'exécution entre les deux dits fils d'exécution (c'est à dire entre au moins un processus de chacun des deux fils d'exécution).
- Le procédé peut comprendre une pluralité de phases d'évaluation de processus concurrents correspondant à des temps de simulation successifs, dans lequel lesdites étapes du sous-procédé de détection de conflits d'accès sont mises en oeuvre après chaque dite phase d'évaluation.
- Le procédé peut comprendre également : lors de ladite évaluation parallèle d'une pluralité de processus concurrents, une étape de surveillance d'au moins une zone de ladite mémoire partagée du système électronique simulé préalablement déclarée comme critique, et de préemption de tous les processus appartenant à un même fil d'exécution qu'un processus ayant essayé d'accéder à ladite ou à chaque dite zone après un premier accès par un autre processus appartenant à un autre fil d'exécution ; et après ladite évaluation parallèle, une étape d'évaluation séquentielle des processus préemptés lors de l'étape précédente.
- Ladite étape de construction d'un graphe orienté peut comprendre : la construction d'une pluralité de graphes orientés partiels, représentatif chacun d'accès à un sous-ensemble de ladite mémoire partagée ; et la fusion de ces graphes pour former un graphe orienté représentatif d'accès à ladite mémoire partagée par lesdits processus concurrents. Dans ce cas, et si ladite mémoire partagée du système électronique simulé comprend une pluralité de locations de mémoires regroupées en une pluralité de pages, ladite construction d'une pluralité de graphes orientés partiels peut comprendre : la construction d'une pluralité de graphes orientés partiels, représentatifs chacun d'accès à une location de mémoire respective ; la fusion des graphes orientés partiels correspondant aux locations de mémoire d'une même page. Par ailleurs, la construction de chaque dit graphe orienté partiel peut comprendre : lors de chaque accès en lecture audit sous-ensemble de la mémoire partagée, l'identification et la mémorisation d'un identifiant du fil d'exécution dont un processus a effectué ledit accès en lecture ; lors de chaque accès en écriture, la création :
   - d'un noeud, dit noeud courant, représentant le fil d'exécution dont un processus a effectué ledit accès en écriture ;
   - de noeuds, dits noeuds lecteurs précédents, représentants des fils d'exécution dont au moins un processus a effectué un accès en lecture audit sous-ensemble de la mémoire partagée avant ledit accès en écriture mais après un éventuel accès en écriture précédent, si au moins un tel fil d'exécution existe ;
   - d'arcs orientés reliant chaque dit noeud lecteur précédent audit noeud courant, si au moins un tel noeud existe ; et
   - si l'accès en écriture n'est pas le premier :
      ∘ d'arcs orientés reliant un noeud, dit noeud en écriture précédent, représentant le fil d'exécution dont un processus a effectué l'accès en écriture immédiatement précédent auxdits noeuds lecteurs précédents, si au moins un tel noeud existe ;
      ∘ ou d'in arc reliant ledit noeud en écriture audit noeud courant si aucun dit noeud lecteur précédent n'existe.

Dans ce cas, la mémorisation de l'identifiant du fil d'exécution dont un processus a effectué ledit accès en lecture peut être effectuée au moyen d'au moins un vecteur associé à chaque fil d'exécution, chaque dit vecteur comprenant autant d'éléments booléens qu'il y a de sous-ensembles de ladite mémoire partagée, chaque élément : étant associé à un dit sous-ensemble, ayant une première valeur binaire par défaut et prenant une seconde valeur binaire, opposée à la précédente, lorsque un processus appartenant audit fil d'exécution effectue un accès au sous-ensemble de ladite mémoire partagée associé audit élément.
- Ledit sous-procédé de détection de conflits d'accès peut comprendre également, si aucun conflit n'est détecté, une étape de détermination d'une première liste, ordonnée, de fils d'exécution devant être évalués de manière séquentielle, et d'une seconde liste de fils d'exécution pouvant être évalués de manière parallèle, cette étape étant mise en oeuvre par linéarisation dudit graphe orienté. Dans ce cas, le procédé peut comprendre également une réexécution de ladite simulation, ladite réexécution comprenant : une phase d'évaluation parallèle des fils d'exécution appartenant à ladite seconde liste ; et une phase d'évaluation séquentielle des fils d'exécution appartenant à ladite première liste.

Un autre objet de l'invention est un produit programme d'ordinateur comprenant du code informatique exécutable par ordinateur, stocké sur un support (de préférence non volatile) lisible par ordinateur et adapté pour mettre en oeuvre un tel procédé.

D'autres caractéristiques, détails et avantages de l'invention ressortiront à la lecture de la description faite en référence aux dessins annexés donnés à titre d'exemple et qui représentent, respectivement :
- la figure 1, un ordinogramme d'une simulation de niveau système électronique réalisée de manière séquentielle en SystemC, conformément à l'art antérieur ;
- la figure 2, un ordinogramme d'une simulation de niveau système électronique réalisée de manière parallèle mais sans détection des conflits d'accès ;
- les figures 3A à 3E, respectivement, une possible implémentation d'une structure de données pour mémoriser les accès en lecture, la constitution d'un graphe de dépendance, une possible implémentation du graphe, la détection de boucles et un exemple de linéarisation d'un tel graphe ;
- la figure 4, un ordinogramme de l'étape de création d'un graphe de dépendance ;
- la figure 5, un ordinogramme illustrant la mise en oeuvre d'un mécanisme de protection des zones critiques de la mémoire partagée ;
- la figure 6, un ordinogramme d'un procédé selon un mode de réalisation de l'invention ; et
- la figure 7, un ordinogramme d'un procédé selon un autre mode de réalisation de l'invention, permettant la reproduction déterministe d'une simulation parallèle.

Comme cela a été mentionné plus haut, l'invention vise notamment à détecter les problèmes d'accès parallèles à des ressources partagées, qui peuvent se produire lors de l'exécution d'une simulation parallèle, à forcer l'exécution séquentielle des processus fortement dépendants pour garantir l'atomicité de leur évaluation, et/ou à rendre totalement prédictible une simulation pour permettre la recherche de bogues et la mise au point du simulateur et des applications par la réutilisation de l'ordre total d'une exécution antérieure.

Pour ce faire, un procédé selon l'invention crée dynamiquement un graphe de dépendance entre les processus pour chaque adresse utilisée et lors de chaque phase d'évaluation. Ceci afin de vérifier que les processus SystemC, bien qu'évalués en parallèle, sont évalués dans un ordre partiel vis à vis de l'ensemble de ces adresses. La structure du graphe est composée de noeuds dont la valeur correspond à l'identifiant d'un fil d'exécution, et d'arcs orientés reliant ces noeuds. Chaque arc correspond à un ordre d'exécution entre les noeuds. Un graphe n'est pas créé si aucune écriture n'intervient puisqu'il ne peut pas y avoir d'erreur de concurrence si tous les accès sont en lecture, mais toutes les lectures sont enregistrées au cas où une écriture surviendrait avant la fin de la phase d'évaluation. Ainsi, un nouveau noeud est créé à chaque nouvelle écriture ou à chaque nouvelle lecture si une écriture a déjà eu lieu. Lors de chaque nouvelle écriture, le graphe est également étendu avec l'ensemble des lectures précédentes. Ce graphe permet de détecter toutes les actions non-commutatives sur toutes les variables et espaces partagés dans le modèle qui peuvent conduire à des conflits d'atomicité de l'évaluation des processus. Ainsi il est important de détecter une lecture ou une écriture si elle est suivie d'une écriture modificative, et une écriture modificative si elle est suivie d'une lecture.

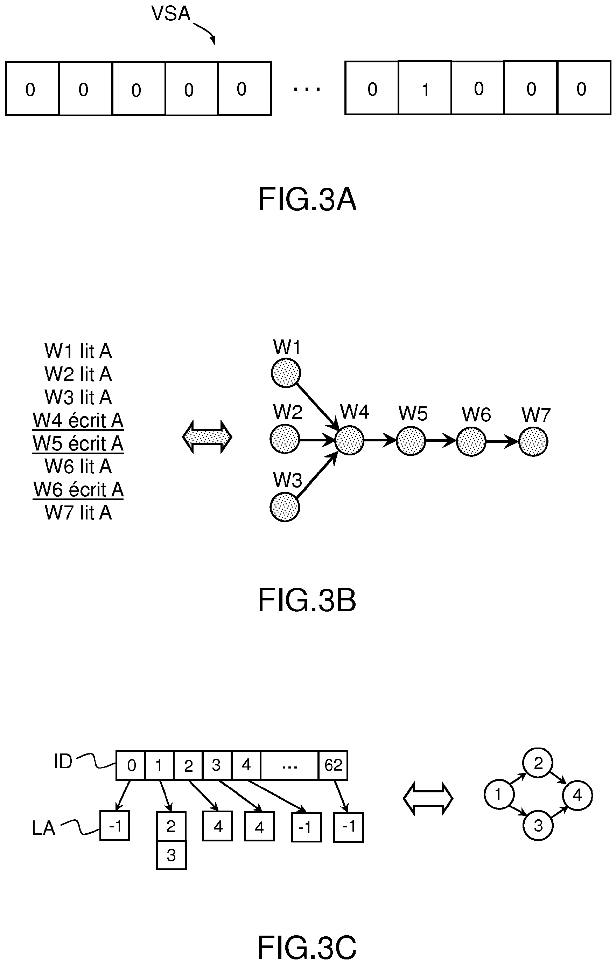

Les accès en lecture sont les plus nombreux, il est donc important que leur surveillance soit la plus efficace possible. Une technique de surveillance des accès en lecture est illustrée sur la figure 3A. Un ensemble de vecteurs VSA, par exemple de 64 éléments, est associé à chaque fil d'exécution, et donc à chaque coeur logique. Les éléments de chaque vecteur sont binaires, ou booléens, et peuvent donc être constitués d'un seul bit, représentant chacun une adresse de la mémoire partagée ; ainsi un simple mot de 64 bits représente 64 adresses. Des techniques de changement de la résolution peuvent augmenter la taille de cette plage ; dans ce cas, chaque élément du vecteur représente un groupe d'adresses de mémoire. Initialement, chaque élément de chaque vecteur a une même valeur binaire, par exemple '0'. Lorsqu'un processus accède en lecture à une adresse d'une mémoire, l'élément correspondant du vecteur VSA associé au fil d'exécution qui exécute le processus prend la valeur opposée, ici '1'. Cela permet de retrouver facilement pour chaque adresse, ou ensemble d'adresses, de la mémoire partagée, les fils d'exécution dont au moins un processus y a accédé en lecture.

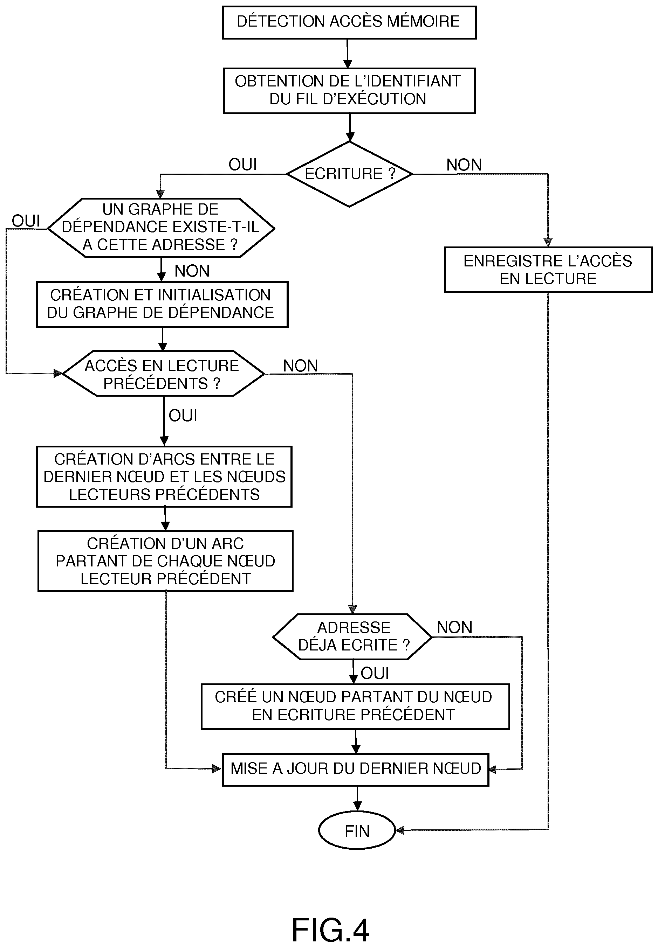

Le processus pour créer le graphe, mis en oeuvre par le noyau de simulation, est le suivant ; ce processus est illustré par l'ordinogramme de la figure 4.

Lorsqu'un accès à une location de mémoire est détecté, l'identifiant du fil d'exécution à l'origine de l'accès est récupéré ; puis il est vérifié s'il s'agit d'un accès en écriture ou en lecture. Si c'est une lecture, celle-ci est sauvegardée dans le vecteur de lecture VSA correspondant. Sinon, on vérifie si le graphe existe déjà et un nouveau graphe est créé dynamiquement si nécessaire. Ensuite, on regarde si des lectures ont eu lieu précédemment à cette adresse. Si oui, alors les identifiants des fils d'exécution, et donc des coeurs logiques, ayant accédé en lecture à cette adresse sont utilisés pour la création de nouveaux noeuds (« noeuds lecteurs ») dans le graphe. Des arcs sont créés entre le dernier noeud en écriture créé et ces nouveaux noeuds lecteurs, puis entre ces noeuds lecteurs et un nouveau noeud représentant l'accès en écriture présent. Si non, on teste si une écriture a eu lieu précédemment et un arc est créé avec le dernier noeud. Enfin, le dernier noeud ajouté est mis à jour avec l'identifiant du fil d'exécution courant. A la fin de la phase d'évaluation parallèle, ce graphe est finalisé. Des noeuds représentant tous les fils d'exécution dont un processus a lu une adresse donnée sont ajoutés à la fin du graphe si celui-ci est non vide. Avant le démarrage de la phase d'évaluation parallèle successive, les graphes de dépendance et les vecteurs de lecture VSA sont réinitialisés.

La figure 3B illustre la création d'un graphe de dépendance GD pour une adresse « A » correspondant à la succession d'accès mémoire suivante :
- un processus du fil d'exécution W1 (« W » de l'anglais « worker », c'est-à-dire « ouvrier ») accède en lecture à l'élément de mémoire A,
   - un processus du fil d'exécution W2 accède en lecture à A,
   - un processus du fil d'exécution W3 accède en lecture à A,
   - un processus du fil d'exécution W4 accède en écriture à A,
   - un processus du fil d'exécution W5 accède en écriture à A,
   - un processus du fil d'exécution W6 accède en lecture à A,
   - un processus du fil d'exécution W6 accède en écriture à A,
   - un processus du fil d'exécution W7 accède en lecture à A.

La figure 3C illustre une structure de données susceptible d'être utilisée pour représenter un graphe de dépendance. Cette structure se présente sous la forme d'un vecteur, de la taille du nombre de noeuds du graphe, dont les éléments ID sont, ou pointent à, des listes LA de noeuds suivants.

Il y a un graphe par adresse ou par groupe d'adresses qui sont traitées de manière unitaire (résolution). Un noeud a une valeur qui correspond à l'identifiant du fil d'exécution qui est à l'origine de l'accès mémoire ; la valeur « -1 » est attribuée aux éléments du vecteur qui correspondent à des fils d'exécution qui n'ont pas de successeur dans le graphe.

A la fin de chaque phase d'évaluation, tous les graphes sont fusionnés pour obtenir un graphe global représentatif de toutes les dépendances d'accès aux ressources mémoire partagées du modèle pour cette phase d'évaluation.

Vérifier l'absence d'un conflit d'atomicité revient à vérifier l'absence de cycles dans le graphe global de dépendance. Il suffit alors de détecter si le graphe possède des composantes fortement connexes. Ceci peut se faire par exemple grâce à l'utilisation d'un algorithme de Tarjan. Si un conflit est détecté, la simulation est arrêtée et la nature du conflit est fournie à l'utilisateur. Avec cette information, le concepteur peut corriger l'application qui s'exécute sur le modèle et protéger les sections critiques, définir les adresses incriminées comme devant être accédées de manière atomiques, ou par exemple allouer différemment les processus à l'origine du conflit d'accès sur les coeurs logiques de façon à ce que ces processus s'évaluent de façon séquentielle.

Afin d'améliorer l'efficacité du procédé, il peut être avantageux d'effectuer la construction des graphes de dépendance et la détection des conflits de manière hiérarchisée en considérant que la mémoire partagée est formée de pages, comprenant chacune une pluralité d'adresses mémoire. Ainsi, par exemple, on peut d'abord détecter les composantes fortement connexes dans chaque graphe individuel ; puis, si aucun conflit est détecté à ce niveau, fusionner les graphes correspondant à des emplacements de mémoire appartenant à une même page et procéder à la détection de composantes fortement connexes dans ces graphes de plus haut niveau, enfin fusionner tous ces graphes dans un graphe global unique et effectuer une dernière fois une détection de composantes fortement connexes. Le nombre de niveaux, dans une telle approche hiérarchique peut, bien entendu, être différent de trois.

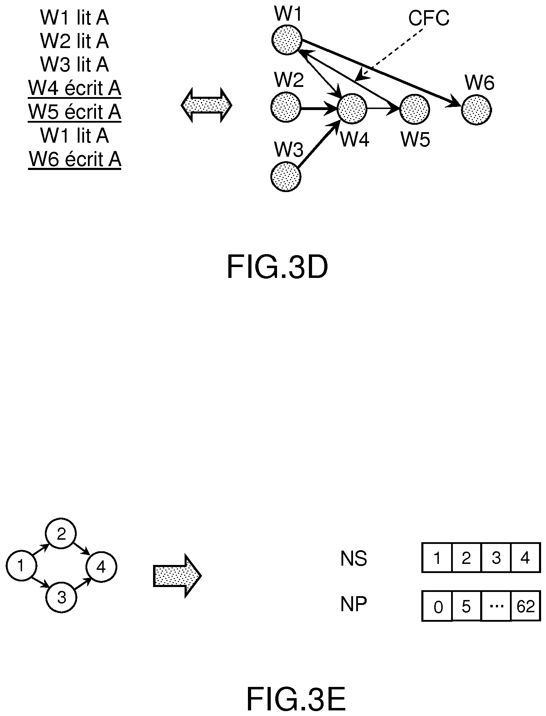

La figure 3D montre un graphe de dépendance GD présentant une composante fortement connexe CFC constituée par les noeuds W1, W4 et W5 et par les arcs qui les relient, qui forment une boucle. Le graphe correspond à la succession d'accès mémoire suivante :
- un processus du fil d'exécution W1 accède en lecture à A,
- un processus du fil d'exécution W2 accède en lecture à A,
- un processus du fil d'exécution W3 accède en lecture à A,
- un processus du fil d'exécution W4 accède en écriture à A,
- un processus du fil d'exécution W5 accède en écriture à A,
- le processus du fil d'exécution W1 accède à nouveau en lecture à A,
- un processus du fil d'exécution W6 accède en écriture à A.

Il est facile de vérifier que le deuxième accès en lecture par W1 provoque une violation d'atomicité.

Si le graphe de dépendance global est acyclique, une simple linéarisation peut être réalisée afin d'obtenir, pour chaque phase d'évaluation, la liste des fils d'exécution (et donc des processus) devant être exécutés en parallèle et la liste ordonnée des fils d'exécution devant s'exécuter séquentiellement. La sérialisation peut être obtenue via un algorithme de tri topologique de graphe. La figure 3E illustre une situation où le nombre maximal de fils d'exécution est de 63 (système informatique à 64 coeurs, dont un est consacré à l'exécution du noyau de simulation) où les fils d'exécution 1 à 4 effectuent des accès mémoire qui ne donnent pas lieu à conflit. Le graphe correspondant est représenté sur la partie gauche de la figure ; sur la droite sont représentées :
- une liste ordonnée NS, obtenue par linéarisation du graphe, contenant les fils d'exécution qui doivent être évalués de manière séquentielle (on remarquera que l'ordre indiqué - 1, 2, 3, 4 - n'est pas le seul possible ; l'ordre 1, 3, 2, 4 aurait aussi pu être choisi) ;
- une liste NP de fils d'exécution (0 et 5 à 62) pouvant être évalués de manière parallèle (une exécution séquentielle est bien entendu possible, auquel cas l'ordre n'a pas d'importance). Il convient de souligner que, si les fils d'exécution sont évalués en parallèle par différents coeurs logiques, les processus de chaque fil d'exécution sont nécessairement évalués séquentiellement. La liste NP contient les fils d'exécution qui n'appartiennent pas à NS ; elle est donc aussi obtenue - indirectement - par linéarisation du graphe.

On remarquera également que le fil d'exécution 1 pourrait être affecté à la liste NP dans le cas où les fils d'exécution de NP seront réévalués avant ceux de NS, ou que le fil d'exécution 4 pourrait être affecté à la liste NP dans le cas où les fils d'exécution de NP seront réévalués après ceux de NS. Cette solution permet d'augmenter le parallélisme de lors de l'évaluation de NP et de réduire la durée de l'évaluation de NS.

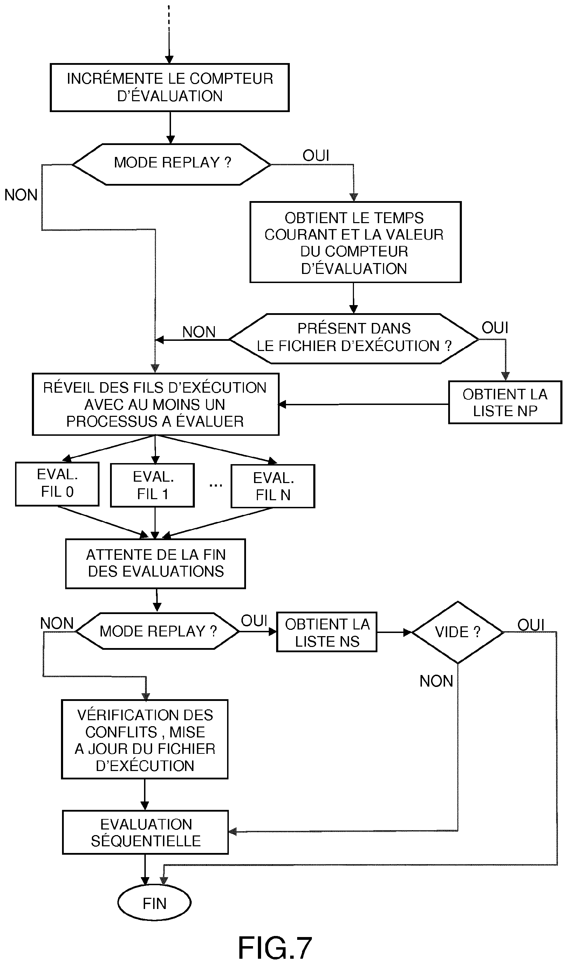

Ces deux listes, ou au moins la liste NS, peuvent être sauvegardées dans un fichier, dit fichier d'exécution, avec une indication du temps de la simulation et du numéro d'itération de la phase d'évaluation correspondants. Ce fichier est nécessaire pour permettre une réexécution déterministe de la simulation, comme cela sera expliqué plus loin en référence à la figure 7.

Comme cela a été évoqué plus haut en référence aux vecteurs de surveillance des accès en lecture VSA, il est possible d'améliorer l'efficacité du procédé en agissant sur sa « granularité », c'est-à-dire en considérant plusieurs locations de mémoire comme une seule location, à laquelle est attribuée un seul élément de chaque vecteur VSA et un seul graphe de dépendance. L'inconvénient est qu'on provoque alors des « faux positifs », c'est-à-dire qu'on détecte des violations d'atomicité qui sont en réalité inexistantes.

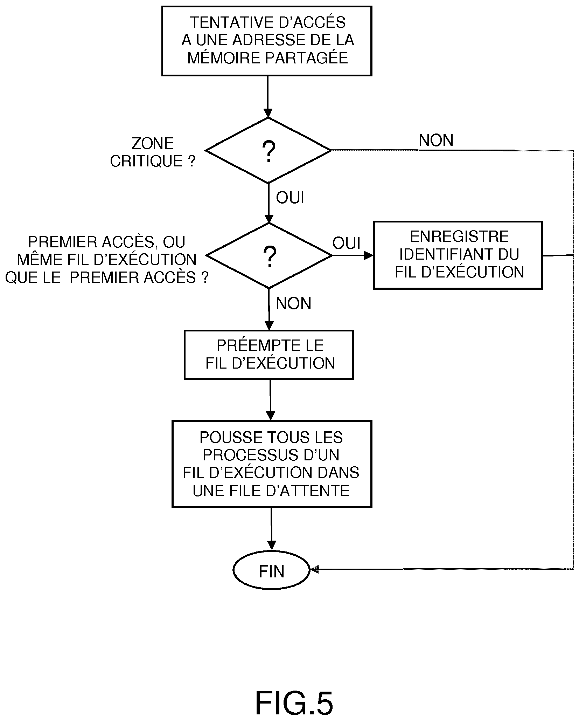

Selon un mode de réalisation préféré de l'invention, des zones de la mémoire partagée peuvent être définies comme étant « critiques », et faire de ce fait l'objet d'une surveillance spéciale afin de forcer l'atomicité de leurs accès en amont et éviter l'occurrence de conflit d'accès, au lieu de se limiter à les détecter a posteriori au moyen des graphes de dépendance. Un tel mécanisme de surveillance est illustré par l'ordinogramme de la figure 5.

Lors de toute requête d'accès à une adresse de la mémoire partagée, le noyau vérifie si cette adresse appartient à une région critique. Dans l'affirmative, il vérifie s'il s'agit du premier accès à cette adresse au cours de la phase d'évaluation en cours. Si c'est le cas, un identifiant du fil d'exécution à l'origine de la requête est sauvegardé dans une structure de données, et l'accès est autorisé. Il en est de même pour tous les accès suivants par des processus de ce même fil d'exécution (ce qui est déterminé grâce à l'identifiant précédemment sauvegardé), qui sont donc traités comme des « premiers » accès. Autrement, tous les processus appartenant au même fil d'exécution que celui à l'origine de la tentative d'accès sont préemptés et poussés dans une file d'attente ; un noeud correspondant au processus préempté est néanmoins crée dans le graphe de dépendance. Les processus contenus dans la file d'attente seront exécutés séquentiellement à la fin de la phase d'évaluation en cours.

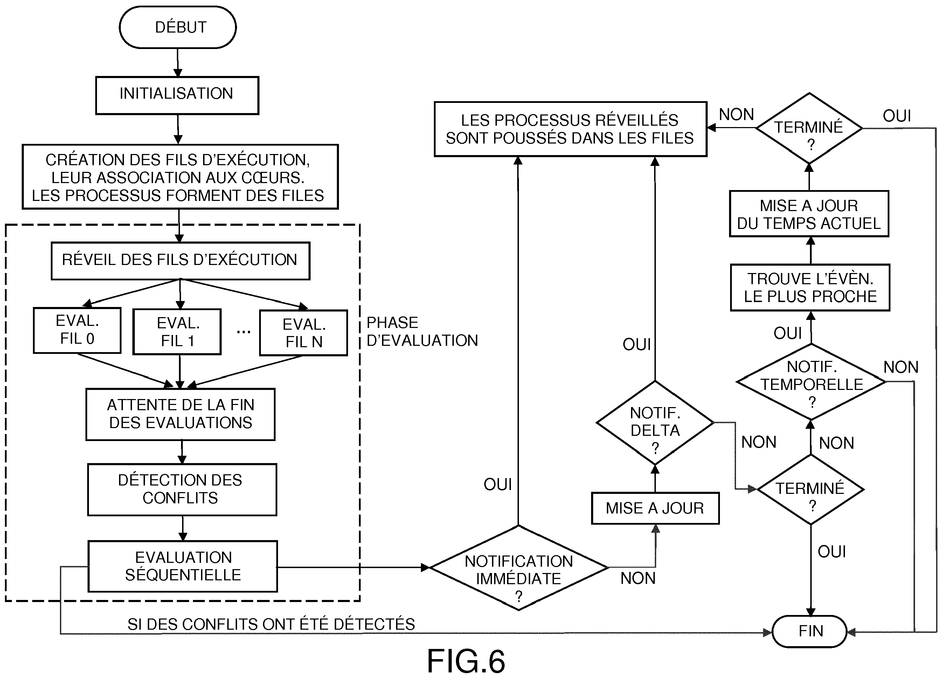

L'ordinogramme de la figure 6 illustre, de manière simplifiée, le déroulement d'une simulation SystemC parallèle selon un mode de réalisation de l'invention. Cet ordinogramme est semblable à celui de la figure 2, mais comporte deux étapes additionnelles :
- à la fin de la phase d'évaluation parallèle, le noyau de simulation détecte d'éventuels conflits d'accès à la mémoire partagée en utilisant les graphes de dépendance, et si de tels conflits sont détectés la simulation s'arrête ;
- si aucun conflit d'accès n'a été détecté, le noyau procède à l'évaluation séquentielle des processus qui ont été préemptés lors de la phase d'évaluation parallèle car ils ont demandé d'accéder à une adresse d'une zone critique de la mémoire auquel un autre processus avait déjà eu accès. Cet ordre d'évaluation séquentiel respecte l'ordre partiel obtenu par le graphe de dépendance global obtenu à la fin de l'évaluation parallèle.

En outre, comme cela a été évoqué plus haut, les graphes de dépendance permettent de construire une liste des fils d'exécution pouvant être exécutés en parallèle et de ceux devant s'exécuter séquentiellement lors de chaque phase d'évaluation. Dans un mode de réalisation, la phase d'évaluation est identifiée par le temps courant de simulation SystemC et le numéro de la phase d'évaluation lors de ce temps SystemC. Ces informations sont sauvegardées dans ledit fichier d'exécution. Aucune information n'est enregistrée dans le fichier pour les instants où aucune dépendance n'a été observée. Ce fichier peut ensuite être utilisé lors d'une autre exécution du même modèle (« mode replay ») afin de recréer l'exact comportement et ordre total d'ordonnancement des processus. Ceci permet de garantir le déterminisme des simulations.

L'ordinogramme de la figure 7 illustre le déroulement de la phase d'évaluation selon un mode de réalisation de l'invention, incluant la possibilité de « rejouer » une simulation déjà effectuée. Au début de chaque phase d'évaluation, un compteur est incrémenté. Si la simulation doit être réalisée en mode « replay », le noyau vérifie si le temps présent d'exécution et la valeur du compteur correspondent à des informations enregistrées dans le fichier d'exécution. Dans l'affirmative, la liste NP des fils d'exécution pouvant être exécutés en parallèle au temps et pour la phase d'évaluation en question est extraite du fichier. Ces fils d'exécution sont ensuite exécutés en parallèle. Ensuite, si la simulation ne doit pas être effectuée en mode « replay », on procède à la détection des conflits d'accès et à la mise à jour du fichier d'exécution. En mode « replay » cette étape n'est pas nécessaire, et on procède simplement à l'extraction de la liste NS à partir dudit fichier. Ensuite, dans les deux cas, les fils d'exécution de ladite liste sont évalués séquentiellement.

La simulation se termine en cas de détection d'un conflit, si la liste d'ordonnancement en mode « replay » est vide ou après la fin de l'évaluation séquentielle.

L'invention a été décrite en relation à des modes de réalisation particuliers, mais des nombreuses variantes sont envisageables. En particulier, plusieurs optimisations sont possibles. Par exemple :
Afin d'améliorer les performances, des créations parallèles de graphes peuvent être réalisées ; cela est rendu possible par un partitionnement de l'espace mémoire en blocs, ce qui permet d'accéder, de créer et modifier les structures de graphes en parallèle par blocs d'adressage et de les fusionner ensuite lors de la phase de détection, par exemple avec un arbre de fusion.

Il est possible de déclarer préalablement les espaces mémoires en lecture seule pour éviter de surveiller ces adresses. La réduction de l'espace à surveiller peut permettre d'améliorer sensiblement les performances.

Il est possible d'ajouter le premier niveau de noeuds de chaque graphe de dépendance (respectivement le dernier) dans la liste des fils d'exécution pouvant être exécutés en parallèle si, lors d'une réexécution déterministe, la phase d'évaluation parallèle est évalué avant (respectivement après) la phase séquentielle.

Il n'est pas indispensable d'arrêter la simulation dès qu'un conflit d'accès est détecté, bien que cela soit généralement préférable.

### Bibliographie :

- [MOY13]: M. Moy, Parallel Programming with SystemC for Loosely Timed Models: A Non-Intrusive Approach, DATE 2013.
- [CHEN12]: W. Chen, X. Han and R. Dômer, "Out-of-order Parallel Simulation for ESL Design", in DATE 2012.
- [CHEN13]: W. Chen and R. Dômer "Optimized out-of-order Parallel Discrète Event Simulation using prédictions", in DATE 2013.
- [MELL10]: A. Mello, I. Maia, A. Greiner, and F. Pecheux, Parallel Simulation of SystemC TLM 2.0 Compilant MPSoC on SMP Workstations, DATE 2010.
- [SCHU13]: C. Schumacher et al., legaSCi: Legacy SystemC Model Intégration into Parallel SystemC Simulators, IPDPSW 2013.
- [EZUD09]: P. Ezudheen et al., Parallelizing SystemC kernel for fast hardware simulation on SMP machines, PADS 2009.
- [BLAN08]: N. Blanc and D. Kroening, Race Analysis for SystemC using model checking, In IEEE/ACM International Conférence on Computer-Aided Design (ICCAD), Piscataway, USA, 2008, pp. 356-363.
- [HELM06]: C. Helmstetter, F. Maraninchi, L. Maillet-Contoz and M. Moy, Automatic generation of schedulings for improving the test coverage of systems-on-a-chip, In Formai Methods in Computer Aided-Design (FMCAD), Washington, DC, USA, 2006, pp. 171-178.
- [SEN08]: A. Sen, V. Ogale and M.S. Abadir, Prédictive run-time vérification of multiprocessor SoCs in SystemC, In DAC, New York, USA, 2008, pp. 948-953.
- [LE14]: H.M. Le and R. Drechsler, Towards Verifying Determinism of SystemC Designs, in DATE, March 2014.
- [SCHU12a]: C. Schumacher, J.H. Weinstock, R. Leupers and G. Ascheid, SCANDAL: SystemC analysis for nondeterministic anomalies, in Forum on Specification and Design Languages (FDL), Vienna, Austria, 2012.
- [HERR06]: F. Herrera and E. Villar, Extension of the SystemC kernel for simulation coverage, In Forum on Specification and Design Languages (FDL), 2006, pp. 161-168.
- [SCHU10]: C. Schumacher, R. Leupers, D. Petras and A. Hoffmann "parSC: Synchronous Parallel SystemC Simulation on Multi-Core Host Architectures", in CODES+ISSS, pages 241-246, Scottsdale, Arizona, USA, October 2010.
- [CHU14]: M.-K. Chung, J.-K. Kim, and S. Ryu "SimParallel: A High Performance Parallel SystemC Simulator Using Hierarchical Multi-threading", in International Symposium on Circuits and Systems (ISCAS), Melbourne, Australia, June 2014.

## Revendications

1. Procédé de simulation parallèle de niveau système électronique mis en oeuvre au moyen d'un système informatique multi-coeurs, ledit procédé comprenant l'évaluation parallèle d'une pluralité de processus concurrents de ladite simulation sur une pluralité de coeurs logiques dudit système informatique, lesdits processus concurrents étant regroupés dans des fils d'exécution, les processus concurrents d'un même fil d'exécution étant évalués séquentiellement par un même coeur logique du système, le procédé étant **caractérisé en ce qu'**il comprend un sous-procédé de détection de conflits d'accès, par lesdits processus concurrents, à une mémoire partagée d'un système électronique simulé, ledit sous-procédé étant mis en oeuvre par un noyau de simulation exécuté par ledit système informatique et comprenant :
• une étape de construction d'un graphe orienté (GD) représentatif d'accès à ladite mémoire partagée par lesdits processus concurrents ; et
• une étape de détection de cycles (CFC) dans ledit graphe ;
un cycle étant considérée représentatif d'un conflit d'accès à ladite mémoire partagée ;
dans lequel ledit graphe orienté comprend des noeuds (W1 - W7), représentant chacun un fil d'exécution accédant à un emplacement de ladite mémoire partagée, et des arcs reliant chacun deux noeuds, chaque arc représentant une relation d'ordre d'exécution entre les deux dits fils d'exécution.

2. Procédé selon la revendication 1, comprenant une pluralité de phases d'évaluation de processus concurrents correspondant à des temps de simulation successifs, dans lequel lesdites étapes du sous-procédé de détection de conflits d'accès sont mises en oeuvre après chaque dite phase d'évaluation.

3. Procédé selon l'une des revendications précédentes comportant également :
• lors de ladite évaluation parallèle d'une pluralité de processus concurrents, une étape de surveillance d'au moins une zone de ladite mémoire partagée du système électronique simulé préalablement déclarée comme critique, et de préemption de tous les processus appartenant à un même fil d'exécution qu'un processus ayant essayé d'accéder à ladite ou à chaque dite zone après un premier accès par un autre processus appartenant à un autre fil d'exécution ; et
• après ladite évaluation parallèle, une étape d'évaluation séquentielle des processus préemptés lors de l'étape précédente.

4. Procédé selon l'une des revendications précédentes dans lequel ladite étape de construction d'un graphe orienté comprend :
• la construction d'une pluralité de graphes orientés partiels, représentatif chacun d'accès à un sous-ensemble de ladite mémoire partagée ; et
• la fusion de ces graphes pour former un graphe orienté représentatif d'accès à ladite mémoire partagée par lesdits processus concurrents.

5. Procédé selon la revendication 4 dans lequel ladite mémoire partagée du système électronique simulé comprend une pluralité de locations de mémoires regroupées en une pluralité de pages, et dans lequel ladite construction d'une pluralité de graphes orientés partiels comprend :
• la construction d'une pluralité de graphes orientés partiels, représentatifs chacun d'accès à une location de mémoire respective ;
• la fusion des graphes orientés partiels correspondant aux locations de mémoire d'une même page.

6. Procédé selon l'une des revendications 4 ou 5 dans lequel la construction de chaque dit graphe orienté partiel comprend :
• lors de chaque accès en lecture audit sous-ensemble de la mémoire partagée, l'identification et la mémorisation d'un identifiant du fil d'exécution dont un processus a effectué ledit accès en lecture ;
• lors de chaque accès en écriture, la création :
∘ d'un noeud, dit noeud courant, représentant le fil d'exécution dont un processus a effectué ledit accès en écriture ;
∘ de noeuds, dits noeuds lecteurs précédents, représentants des fils d'exécution dont au moins un processus a effectué un accès en lecture audit sous-ensemble de la mémoire partagée avant ledit accès en écriture mais après un éventuel accès en écriture précédent, si au moins un tel fil d'exécution existe ;
∘ d'arcs orientés reliant chaque dit noeud lecteur précédent audit noeud courant, si au moins un tel noeud existe ; et
∘ si l'accès en écriture n'est pas le premier :
▪ d'arcs orientés reliant un noeud, dit noeud en écriture précédent, représentant le fil d'exécution dont un processus a effectué l'accès en écriture immédiatement précédent auxdits noeuds lecteurs précédents, si au moins un tel noeud existe ;
▪ ou d'un arc reliant ledit noeud en écriture audit noeud courant si aucun dit noeud lecteur précédent n'existe.

7. Procédé selon la revendication 6 dans lequel la mémorisation de l'identifiant du fil d'exécution dont un processus a effectué ledit accès en lecture est effectuée au moyen d'au moins un vecteur (VSA) associé à chaque fil d'exécution, chaque dit vecteur comprenant autant d'éléments booléens qu'il y a de sous-ensembles de ladite mémoire partagée, chaque élément :
• étant associé à un dit sous-ensemble,
• ayant une première valeur binaire par défaut et
• prenant une seconde valeur binaire, opposée à la précédente, lorsque un processus appartenant audit fil d'exécution effectue un accès au sous-ensemble de ladite mémoire partagée associé audit élément.

8. Procédé selon l'une des revendications précédentes, dans lequel ledit sous-procédé de détection de conflits d'accès comprend également, si aucun conflit n'est détecté,
• une étape de détermination d'une première liste (NS), ordonnée, de fils d'exécution devant être évalués de manière séquentielle, et d'une seconde liste (NP) de fils d'exécution pouvant être évalués de manière parallèle,
cette étape étant mise en oeuvre par linéarisation dudit graphe orienté.

9. Procédé selon la revendication 8 comprenant également une réexécution de ladite simulation, ladite réexécution comprenant :
• une phase d'évaluation parallèle des fils d'exécution appartenant à ladite seconde liste ; et
• une phase d'évaluation séquentielle des fils d'exécution appartenant à ladite première liste.

10. Produit programme d'ordinateur comprenant du code informatique exécutable par ordinateur, stocké sur un support lisible par ordinateur et adapté pour mettre en oeuvre un procédé selon l'une des revendications précédentes.

## Patentansprüche

1. Paralleles Simulationsverfahren auf elektronischer Systemebene, durchgeführt mit einem Multikern-Informatiksystem, wobei das Verfahren das parallele Beurteilen von mehreren gleichzeitigen Prozessen der Simulation auf mehreren Logikkernen des Informatiksystems beinhaltet, wobei die gleichzeitigen Prozesse in Ausführungsthreads gruppiert werden, wobei die gleichzeitigen Prozesse eines selben Ausführungsthread sequentiell durch einen selben Logikkern des Systems beurteilt werden, wobei das Verfahren **dadurch gekennzeichnet ist, dass** es ein Subverfahren zum Erkennen von Zugriffskonflikten durch die gleichzeitigen Prozesse auf einen gemeinsam genutzten Speicher eines simulierten elektronischen Systems beinhaltet, wobei das Subverfahren durch einen Simulationskernel durchgeführt wird, der von dem Informatiksystem ausgeführt wird und Folgendes beinhaltet:
• einen Schritt des Konstruierens einer orientierten Grafik (GD), die den Zugriff auf den gemeinsam genutzten Speicher durch die gleichzeitigen Prozesse repräsentiert; und
• einen Schritt des Erkennens von Zyklen (CFC) in der Grafik;
wobei ein Zykus als einen Zugriffskonflikt auf den gemeinsam genutzten Speicher repräsentierend angesehen wird;
wobei die orientierte Grafik Knoten (W1 - W7), die jeweils einen Ausführungsthread repräsentieren, der auf einen Ort des gemeinsam genutzten Speichers zugreift, und Bögen umfasst, die jeweils zwei Knoten miteinander verbinden, wobei jeder Bogen eine Beziehung der Ausführungsreihenfolge zwischen den zwei Ausführungsthreads repräsentiert.

2. Verfahren nach Anspruch 1, das mehrere Beurteilungsphasen von gleichzeitigen Prozessen entsprechend aufeinander folgenden Simulationszeiten beinhaltet, wobei die Schritte des Subverfahrens zum Erkennen von Zugriffskonflikten nach jeder Beurteilungsphase durchgeführt werden.

3. Verfahren nach einem der vorherigen Ansprüche, das ferner Folgendes beinhaltet:
• während der parallelen Beurteilung von mehreren gleichzeitigen Prozessen, einen Schritt des Überwachens von wenigstens einer zuvor als kritisch deklarierten Zone des gemeinsam genutzten Speichers des simulierten elektronischen Systems, und des Präemptierens aller Prozesse, die zu einem selben Ausführungsthread gehören wie ein Prozess, der versucht hat, nach einem ersten Zugriff durch einen anderen Prozess, der zu einem anderen Ausführungsthread gehört, auf die oder jede Zone zuzugreifen; und
• nach jeder parallelen Beurteilung einen Schritt des sequentiellen Beurteilens der im vorherigen Schritt präemptierten Prozesse.

4. Verfahren nach einem der vorherigen Ansprüche, wobei der Schritt des Konstruierens einer orientierten Grafik Folgendes beinhaltet:
• Konstruieren von mehreren partiellen orientierten Grafiken, die jeweils einen Zugriff auf einen Teilsatz des gemeinsam genutzten Speichers repräsentieren; und
• Vereinigen dieser Grafiken zum Bilden einer orientierten Grafik, die den Zugriff auf den gemeinsam genutzten Speicher durch die gleichzeitigen Prozessen repräsentiert.

5. Verfahren nach Anspruch 4, bei dem der gemeinsam genutzte Speicher des simulierten elektronischen Systems mehrere Speicherorte umfasst, die zu mehreren Seiten gruppiert sind, und wobei die Konstruktion von mehreren partiellen orientierten Grafiken Folgendes beinhaltet:
• Konstruieren von mehreren partiellen orientierten Grafiken, die jeweils einen Zugriff auf einen jeweiligen Speicherort repräsentieren;
• Vereinigen von partiellen orientierten Grafiken, die den Speicherorten einer selben Seite entsprechen.

6. Verfahren nach Anspruch 4 oder 5, bei dem die Konstruktion jeder partiellen orientierten Grafik Folgendes beinhaltet:
• bei jedem Lesezugriff auf den Teilsatz des gemeinsam genutzten Speichers, Identifizieren und Speichern einer Kennung des Ausführungsthread, von dem ein Prozess den Lesezugriff bewirkt hat;
• bei jedem Lesezugriff, Erzeugen:
∘ eines Knotens, laufender Knoten genannt, der den Ausführungsthread repräsentiert, von dem ein Prozess den Schreibzugriff bewirkt hat;
∘ von Knoten, vorherige Leseknoten genannt, die Ausführungsthreads repräsentieren, von denen wenigstens ein Prozess einen Lesezugriff auf den Teilsatz des gemeinsam genutzten Speichers vor dem Schreibzugriff, aber nach einem eventuellen vorherigen Lesezugriff bewirkt hat, wenn wenigstens ein solcher Ausführungsthread existiert;
∘ von orientierten Bögen, die jeweils den vorherigen Leseknoten mit dem laufenden Knoten verbinden, wenn wenigstens ein solcher Knoten existiert; und
∘ wenn der Schreibzugriff nicht der erste ist:
▪ von orientierten Bögen, die einen Knoten, vorheriger Schreibknoten genannt, der den Ausführungsthread repräsentiert, von dem ein Prozess den unmittelbar vorhergehenden Schreibzugriff bewirkt hat, mit den vorherigen Leseknoten verbinden, wenn wenigstens ein solcher Knoten existiert;
▪ oder eines Bogens, der den Schreibknoten mit dem laufenden Knoten verbindet, wenn kein vorhergehender Leseknoten existiert.

7. Verfahren nach Anspruch 6, bei dem das Speichern der Kennung des Ausführungsthread, von dem ein Prozess den Lesezugriff bewirkt hat, wenigstens mit Hilfe eines mit jedem Ausführungsthread assoziierten Vektors (VSA) bewirkt wurde, wobei jeder Vektor so viele boolesche Elemente umfasst wie es Teilsätze des gemeinsam genutzten Speichers gibt, wobei jedes Element:
• mit einem Teilsatz assoziiert ist,
• vorgabemäßig einen ersten binären Wert hat, und
• einen dem vorherigen entgegengesetzten zweiten binären Wert annimmt, wenn ein Prozess, der zu dem Ausführungsthread gehört, einen Zugriff auf den Teilsatz des mit dem Element assoziierten gemeinsam genutzten Speichers bewirkt.

8. Verfahren nach einem der vorherigen Ansprüche, bei dem das Teilverfahren zum Erkennen von Zugriffskonflikten auch, wenn kein Konflikt erkannt wird
• einen Schritt des Bestimmens einer ersten geordneten Liste (NS) von Ausführungsthreads, die auf sequentielle Weise beurteilt werden müssen, und einer zweiten Liste (NP) von Ausführungsthreads beinhaltet, die auf parallele Weise beurteilt werden können,
wobei dieser Schritt durch Linearisieren der orientierten Grafik durchgeführt wird.

9. Verfahren nach Anspruch 8, das auch eine erneute Ausführung der Simulation beinhaltet, wobei die erneute Ausführung Folgendes beinhaltet:
• eine parallele Beurteilungsphase für Ausführungsthreads, die zu der zweiten Liste gehören; und
• eine sequentielle Beurteilungsphase von Ausführungsthreads, die zu der ersten Liste gehören.

10. Computerprogrammprodukt, das von einem Computer ausführbaren Code umfasst, gespeichert auf einem computerlesbaren Medium und ausgelegt zum Durchführen eines Verfahrens nach einem der vorherigen Ansprüche.

## Claims

1. An electronic system level parallel simulation method implemented by means of a multi core computer system, said method comprising the parallel evaluation of a plurality of concurrent processes of said simulation on a plurality of logic cores of said computer system, said concurrent processes being grouped together in threads of execution, the concurrent processes of a same thread of execution being evaluated sequentially by a same logic core of the system, the method being **characterized in that** it comprises a sub method of detection of conflicts of access, by said concurrent processes, to a shared memory of a simulated electronic system, said sub method being implemented by a simulation kernel executed by said computer system and comprising:
• a step of construction of an oriented graph (GD) representative of access to said shared memory by said concurrent processes; and
• a step of detection of cycles (CFC) in said graph;
a cycle being considered representative of a conflict of access to said shared memory;
in which said oriented graph comprises nodes (W1 - W7), each representing a thread of execution accessing a location of said shared memory, and arcs each linking two nodes, each arc representing a relationship of order of execution between the two said threads of execution.

2. The method as claimed in claim 1, comprising a plurality of concurrent process evaluation phases corresponding to successive simulation times, in which said steps of the sub method of detection of conflicts of access are implemented after each said evaluation phase.

3. The method as claimed in one of the preceding claims, also comprising:
• in said parallel evaluation of a plurality of concurrent processes, a step of monitoring of at least one zone of said shared memory of the simulated electronic system previously declared as critical, and of preemption of all the processes belonging to a same thread of execution as a process having tried to access said or each said zone after a first access by another process belonging to another thread of execution; and
• after said parallel evaluation, a step of sequential evaluation of the processes preempted in the preceding step.

4. The method as claimed in one of the preceding claims, in which said step of construction of an oriented graph comprises:
• the construction of a plurality of partial orientated graphs, each representative of access to a subset of said shared memory ; and
• the merging of these graphs to form an oriented graph representative of access to said shared memory by said concurrent processes.

5. The method as claimed in claim 4, in which said shared memory of the simulated electronic system comprises a plurality of memory locations grouped together in a plurality of pages, and in which said construction of a plurality of partial oriented graphs comprises:
• the construction of a plurality of partial oriented graphs, each representative of access to a respective memory location;
• the merging of the partial oriented graphs corresponding to the memory locations of a same page.

6. The method as claimed in one of claims 4 or 5, in which the construction of each said partial oriented graph comprises:
• on each read mode access to said subset of the shared memory, the identification and the memorizing of an identifier of the thread of execution whose process has performed said read mode access;
• on each write mode access, the creation:
∘ of a node, called current node, representing the thread of execution whose process has performed said write mode access;
∘ of nodes, called preceding reading nodes, representing threads of execution of which at least one process has performed a read mode access to said subset of the shared memory before said write mode access, but after a possible preceding write mode access, if at least one such thread of execution exists;
∘ of oriented arcs each linking said preceding reading node to said current node, if at least one such node exists; and
∘ if the write mode access is not the first:
▪ of oriented arcs linking a node, called preceding writing node, representing the thread of execution of which a process has performed the immediately preceding write mode access to said preceding reading nodes, if at least one such node exists;
▪ or of an arc linking said writing node to said current node if no said preceding reading node exists.

7. The method as claimed in claim 6, in which the memorizing of the identifier of the thread of execution of which a process has performed said read mode access, is performed by means of at least one vector (VSA) associated with each thread of execution, each said vector comprising as many Boolean elements as there are subsets of said shared memory, each element:
• being associated with one said subset,
• having a first default binary value and
• taking a second binary value, opposite the preceding one, when a process belonging to said thread of execution performs an access to the subset of said shared memory associated with said element.

8. The method as claimed in one of the preceding claims, in which said access conflict detection sub method also comprises, if no conflict is detected,
• a step of determination of an ordered first list (NS) of threads of execution that have to be evaluated sequentially, and of a second list (NP) of threads of execution that can be evaluated in parallel,
this step being implemented by linearization of said orientated graph.

9. The method as claimed in claim 8, also comprising a repeat execution of said simulation, said repeat execution comprising:
• a phase of parallel evaluation of the threads of execution belonging to said second list; and
• a phase of sequential evaluation of the threads of execution belonging to said first list.

10. A computer program product comprising computer executable computer code, stored on a computer readable medium and suitable for implementing a method as claimed in one of the preceding claims.
